# EUROPEAN PATENT APPLICATION

(11) **EP 4 723 034 A1**
(43) Date of publication of application: **08.04.2026**
(21) Application number: 24845392.0
(22) Date of filing: 09.07.2024
(51) Int. Cl.: G06T 7/00, B66F 9/24, G06T 7/70

(54) **IDENTIFICATION SYSTEM, IDENTIFICATION METHOD, AND WORK VEHICLE**

(30) Priority: 27.07.2023 JP 2023122271
(71) Applicant: Komatsu Ltd., Tokyo 105-8316 (JP)
(72) Inventor: IWANAGA, Yoshihiro, Tokyo 105-8316 (JP)
(74) Representative: Flügel Preissner Schober Seidel
(86) International application number: PCT/JP2024/024776
(87) International publication number: WO 2025/023011

(57) **Abstract**

An identification system 1 includes a three-dimensional sensor 11 that is attached to a work vehicle and detects objects present around the work vehicle, a camera 12 that is attached to the work vehicle and captures an image of surroundings of the work vehicle, and a controller 20. The controller 20 acquires point cloud data that is object detection data from the three-dimensional sensor 11 and image data of a captured image captured by the camera 12, identifies a target on the basis of the point cloud data, converts the captured image using an identification result based on the point cloud data, and identifies the target on the basis of a converted image.

## Description

### Technical Field

The present disclosure relates to an identification system, an identification method and a work vehicle.

### Background Art

For example, in order to perform accurate work by a work vehicle such as a dump truck, a wheel loader, a shovel, or a forklift, it is necessary to improve the identification performance of a work target by the work vehicle. As disclosed in Patent Literature 1, there is known a technique including a laser sensor that detects a distance to a pallet as a target, a plane equation calculation unit that calculates a plane equation of a front surface of the pallet on the basis of detection data of the laser sensor, and an estimation calculation unit that estimates a position and a posture of the pallet using the plane equation of the front surface of the pallet calculated by the plane equation calculation unit, in which the estimation calculation unit calculates a yaw angle, a pitch angle, and a roll angle of the pallet as the posture of the pallet.

### Citation List

### Patent Literature

Patent Literature 1: JP 2021-42070 A

### Summary of Invention

### Technical Problem

For example, in order to estimate a position and a posture of a work target by a work vehicle such as a dump truck, a wheel loader, a shovel, or a forklift with high accuracy, it is effective to identify the target using a three-dimensional sensor such as LiDAR with high distance measurement accuracy. However, in a point cloud that is the measurement data of the three-dimensional sensor, the target may be erroneously identified due to, for example, absence of target color information or low resolution. In order to improve the identification performance, it is effective to use a captured image captured by a camera, but there is a risk that a calculation load increases.

An object of an aspect of the present disclosure is to provide an identification system, an identification method, and a work vehicle capable of identifying a target from a captured image captured by a camera while suppressing a calculation load.

### Solution to Problem

According to an aspect of the present disclosure, there is provided an identification system for identifying a target from objects present around a work vehicle, the identification system including: an object detection sensor attached to the work vehicle and configured to detect objects present around the work vehicle; a camera attached to the work vehicle and configured to capture an image of surroundings of the work vehicle; and a controller. The controller acquires point cloud data that is object detection data from an object detection sensor and image data of a captured image captured by the camera, identifies the target on the basis of the point cloud data, converts the captured image using an identification result based on the point cloud data, and identifies the target on the basis of the converted image.

According to an aspect of the present disclosure, there is provided an identification method for identifying a target from objects present around a work vehicle, the identification method including: a step of acquiring point cloud data that is object detection data from an object detection sensor attached to the work vehicle and configured to detect the objects present around the work vehicle; a step of acquiring image data of a captured image from a camera attached to the work vehicle and configured to capture an image of surroundings of the work vehicle; a step of identifying a target on a basis of the point cloud data; a step of converting the captured image using an identification result based on the point cloud data; and a step of identifying the target on a basis of a converted image.

According to an aspect of the present disclosure, there is provided a work vehicle including: a vehicle body, an object detection sensor attached to the work vehicle and configured to detect objects present around the work vehicle; a camera attached to the work vehicle and configured to capture an image of surroundings of the work vehicle; and a controller. The controller acquires point cloud data that is object detection data from an object detection sensor and image data of a captured image captured by the camera, identifies the target on the basis of the point cloud data, converts the captured image using an identification result based on the point cloud data, and identifies the target on the basis of the converted image.

### Advantageous Effects of Invention

According to an aspect of the present disclosure, there is provided an identification system, an identification method, and a work vehicle capable of identifying a target from a captured image captured by a camera while suppressing a calculation load.

### Brief Description of Drawings

Fig. 1 is a side view illustrating a work vehicle according to an embodiment.
Fig. 2 is a functional block diagram illustrating an identification system according to the embodiment.
Fig. 3 is a block diagram illustrating a computer system according to the embodiment.
Fig. 4 is a schematic diagram illustrating an operation of the work vehicle according to the embodiment.
Fig. 5 is a view illustrating an example of a point cloud indicating a target.
Fig. 6 is a schematic diagram for explaining an example of target identification processing.
Fig. 7 is a view illustrating an example of a target binary image.
Fig. 8 is a view illustrating an example of a target feature pattern.
Fig. 9 is a schematic diagram illustrating a positional relationship among a three-dimensional sensor, a camera, and a target.
Fig. 10 is a view for explaining an example of a captured image of a target.
Fig. 11 is a view for explaining an example of a converted image obtained by performing viewpoint conversion of the captured image illustrated in Fig. 10.
Fig. 12 is a flowchart illustrating an example of processing of a target identification method by a point cloud.
Fig. 13 is a flowchart illustrating an example of processing of the target identification method according to the embodiment.

### Description of Embodiments

Hereinafter, embodiments according to the present disclosure will be described with reference to the drawings, but the present disclosure is not limited thereto. The components of the embodiments to be described below can be appropriately combined. In addition, some components may not be used.

### [Embodiment]

### <Work Vehicle>

A work vehicle identifies a target from objects present around the work vehicle at the work site. In an embodiment, the work vehicle is, for example, a wheel loader, a forklift, or the like.

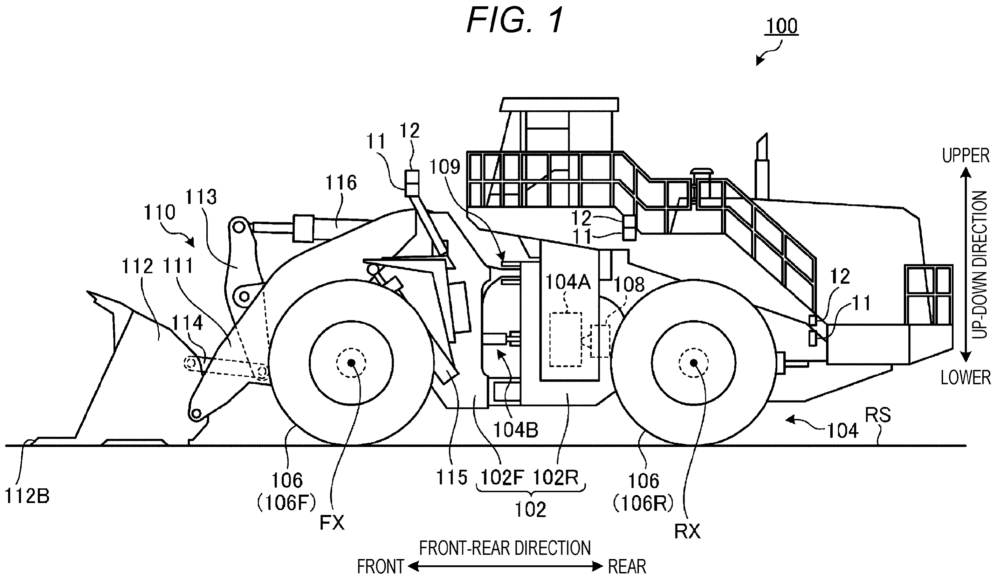

Fig. 1 is a side view illustrating a work vehicle according to the embodiment. In the embodiment, a work vehicle 100 is a wheel loader. The work vehicle 100 may be a manned vehicle operated by a driving operation of a driver, or may be an unmanned vehicle operated in an unmanned manner. A wheel loader 100 performs a loading operation of loading a conveyance object picked up by a work machine 110.

In the embodiment, a target identified by the wheel loader 100 is a dump truck. The target is not limited to a dump truck, and may be a conveyance object. The conveyance object is, for example, a pallet, a skid, or a container. The conveyance object has a pair of fork insertion holes.

In the following description, the positional relationship of each part will be described using terms such as an up-down direction, a vehicle width direction, and a front-rear direction. The up-down direction refers to a direction orthogonal to the ground contact surface of a tire 106 in contact with the ground RS. The vehicle width direction refers to a direction parallel to the rotation axis of a wheel 105. The front-rear direction refers to a direction orthogonal to the up-down direction and the vehicle width direction.

"Upper" refers to one direction in the up-down direction, and refers to a direction in which a cab 103R is present using the ground contact surface of the tire 106 as a reference. "Lower" refers to a direction opposite to "upper" in the up-down direction. "Left" refers to one direction of the vehicle width direction. "Right" refers to a direction opposite to "left" in the vehicle width direction. "Front" refers to one direction of the front-rear direction, and refers to a direction in which a work machine 110 is present using the cab 103R as a reference. "Rear" refers to a direction opposite to the "front" in the front-rear direction.

As illustrated in Fig. 1, the wheel loader 100 includes a vehicle body 102, a traveling device 104, and the work machine 110.

The vehicle body 102 includes a vehicle body front portion 102F and a vehicle body rear portion 102R disposed behind the vehicle body front portion 102F. The vehicle body front portion 102F and the vehicle body rear portion 102R are bendably connected via a joint mechanism 109.

The traveling device 104 supports the vehicle body 102 and travels on the ground RS. The traveling device 104 includes a power source 104A, a steering device 104B, wheels 106, and a power transmission device 108.

The power source 104A generates power for driving the wheel loader 100. The power source 104A is, for example, an electric motor.

The steering device 104B is provided in the joint mechanism 109 in order to steer the wheel loader 100. When the steering device 104B operates, the vehicle body front portion 102F is bent with respect to the vehicle body rear portion 102R. When the vehicle body front portion 102F is bent with respect to the vehicle body rear portion 102R, the traveling direction of the wheel loader 100 is adjusted. The steering device 104B is, for example, a hydraulic cylinder.

The wheels 106 include two front wheels 106F rotatably supported by the vehicle body front portion 102F and two rear wheels 106R rotatably supported by the vehicle body rear portion 102R.

In the embodiment, the left-right direction is a direction parallel to the rotation axes of the front wheels 106F and the rear wheels 106R when the wheel loader 100 travels in a straight traveling state. The up-down direction is a direction orthogonal to the ground contact surfaces of the front wheels 106F and the rear wheels 106R. The front-back direction is a direction orthogonal to each of the left-right direction and the up-down direction.

The power transmission device 108 transmits the driving force of the power source 104A to the wheels 106. In the power transmission device 108, the wheel loader 100 is accelerated or decelerated by changing the output from the power source 104A. In the power transmission device 108, the wheel loader 100 moves forward or backward by switching the rotation directions of the wheels 106.

The work machine 110 is supported by the vehicle body front portion 102F. At least a part of the work machine 110 is disposed in front of the vehicle body front portion 102F. The work machine 110 includes a boom 111, a bucket 112, a bell crank 113, a link 114, a boom cylinder 115, and a bucket cylinder 116.

The boom 111 is rotatably connected to the vehicle body front portion 102F. The bell crank 113 is connected to the bucket 112 via the link 114. The bucket 112 is rotatably connected to a distal end portion of the boom 111. The bucket 112 is a work member having a distal end portion 112B including a blade edge. The bucket 112 is disposed in front of the front tires 106F.

The boom cylinder 115 is a hydraulic cylinder that generates power for operating the boom 111. When the boom cylinder 115 expands and contracts, the boom 111 performs a raising operation or a lowering operation.

The bucket cylinder 116 is a hydraulic cylinder that generates power for operating the bucket 112. When the bucket cylinder 116 expands and contracts, the bucket 112 performs a dumping operation or a tilting operation. When the bucket 112 performs the tilting operation, the bucket 112 scoops up the excavated object. When the bucket 112 performs the dumping operation, the excavated object held by the bucket 112 is discharged from the bucket 112.

### <Identification System of Work Vehicle>

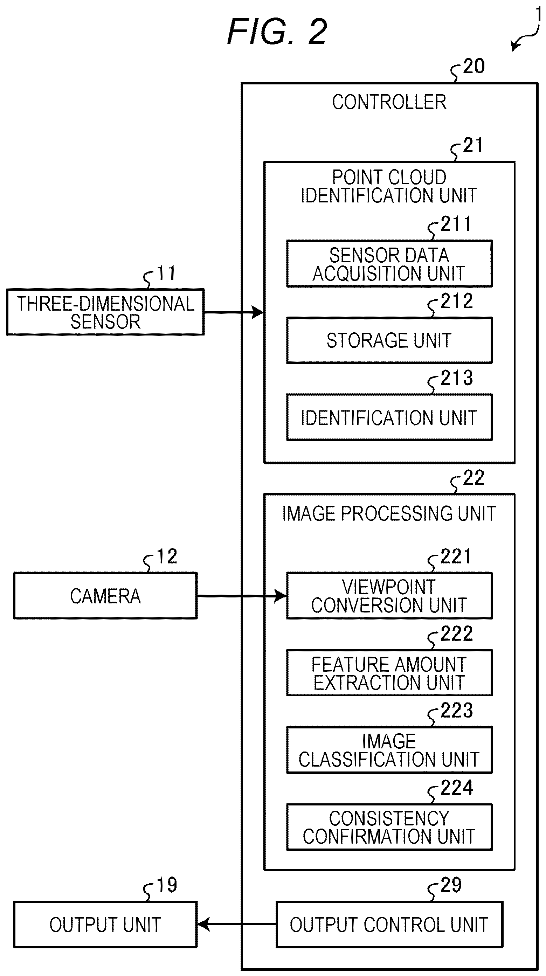

Fig. 2 is a functional block diagram illustrating an identification system according to the first embodiment. An identification system 1 of the wheel loader 100 includes a three-dimensional sensor (object detection sensor) 11, a camera 12, an output unit 19, and a controller 20. The three-dimensional sensor 11, the camera 12, the output unit 19, and the controller 20 are connected to communicate data wirelessly or by wire.

In the embodiment, the three-dimensional sensor 11 and the camera 12 are attached to the wheel loader 100 as one set. The number of three-dimensional sensors 51 and the number of cameras 52 are not particularly limited, and for example, a plurality of three-dimensional sensors 11 and a plurality of cameras 12 may be disposed in the wheel loader 100.

The three-dimensional sensor 11 is attached to the wheel loader 100. In the embodiment, the three-dimensional sensor 11 is attached to the front portion of the wheel loader 100. The number of three-dimensional sensors 11 is not particularly limited, and for example, a plurality of three-dimensional sensors 11 may be disposed in the wheel loader 100. The three-dimensional sensor 11 is an object detection sensor that detects an object present around the wheel loader 100. In the embodiment, the three-dimensional sensor 11 is an object detection sensor that detects an object present in front of the wheel loader 100. The three-dimensional sensor 11 can detect, for example, a range of about several 10 [m]. The three-dimensional sensor 11 transmits the detected object detection data to the controller 20.

The three-dimensional sensor 11 acquires three-dimensional data of the object. The three-dimensional data of the object includes a point cloud including a plurality of detection points defined on the surface of the object. The point cloud indicates a relative distance and a relative position between the three-dimensional sensor 11 and each of the plurality of detection points defined on the surface of the object. As the three-dimensional sensor 11, a laser sensor (light detection and ranging (LiDAR)) that detects an object by emitting laser light is exemplified. Note that the three-dimensional sensor 11 may be another non-contact sensor such as an infrared sensor that detects an object by emitting infrared light or a radar sensor (radio detection and ranging(RADAR)) that detects an object by emitting radio waves.

The camera 12 is attached to the wheel loader 100. The camera 12 can capture an image of surroundings of the wheel loader 100. In the embodiment, the camera 12 is a camera that captures an image of an object present in front of the wheel loader 100. The camera 12 can capture an image of a range of about several 10 [m], for example. The camera 12 is disposed at a position where an image of a target can be captured. The camera 12 transmits the captured image data to the controller 20.

The output unit 19 outputs an identification result. The output unit 19 is, for example, a monitor, a lamp, a buzzer, or the like. The output unit 19 outputs the identification result under the control of an output control unit 29.

### <Controller>

The controller 20 identifies an object around the wheel loader 100. The controller 20 can acquire the point cloud data that is the object detection data from the three-dimensional sensor 11 as the object detection sensor and the data of the captured image captured by the camera 12. The controller 20 includes a numerical operation device (processor) such as a central processing unit (CPU).

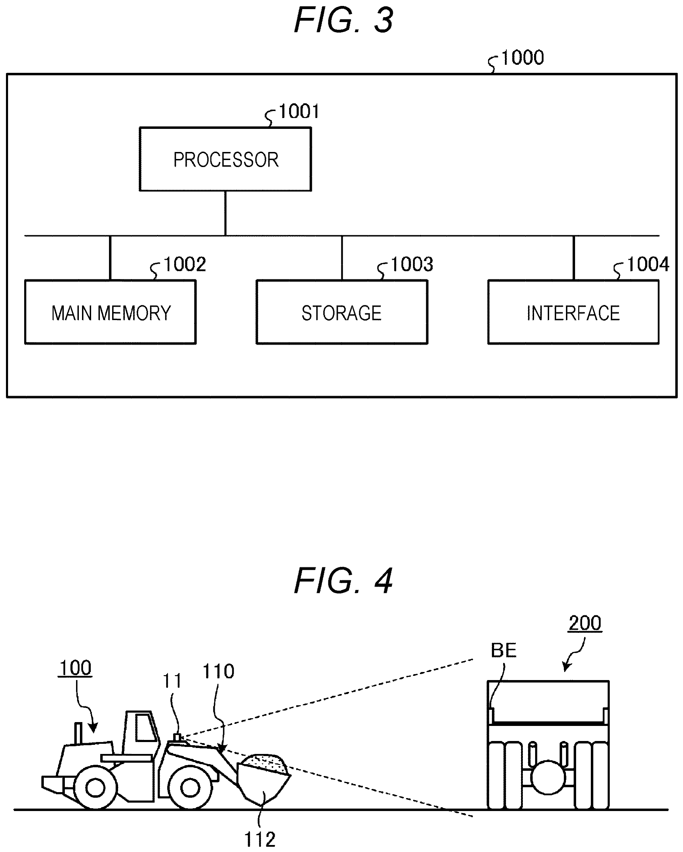

Fig. 3 is a block diagram illustrating a computer system according to the first embodiment. The controller 20 includes a computer system 1000. The computer system 1000 includes a processor 1001 such as the CPU, a main memory 1002 including a nonvolatile memory such as a read only memory (ROM) and a volatile memory such as a random access memory (RAM), a storage 1003, and an interface 1004 including an input/output circuit. The above-described function of the controller 20 is stored in the storage 1003 as a program. The processor 1001 reads the program from the storage 1003, develops the program in the main memory 1002, and executes the above-described processing according to the program. Note that the program may be distributed to the computer system 1000 via a network.

In the embodiment, the controller 20 includes a point cloud identification unit 21, an image processing unit 22, and an output control unit 29.

The point cloud identification unit 21 acquires the object detection data from the three-dimensional sensor 11. The point cloud identification unit 21 identifies a target on the basis of the object detection data. The point cloud identification unit 21 identifies a position and a posture of the target from the object detection data. Note that the method of identification by the point cloud identification unit 21 is not limited.

An example of the method of identification by the point cloud identification unit 21 will be described. The point cloud identification unit 21 identifies a target on the basis of the point cloud data that is the object detection data of the three-dimensional sensor 11. More specifically, the point cloud identification unit 21 estimates a plane constituting at least a part of an outer shape of the target from the acquired point cloud data. The point cloud identification unit 21 projects the point cloud data onto the projection plane, three-dimensionally restores a portion having a high point cloud density on the projection plane, and estimates a target plane. Then, the point cloud identification unit 21 extracts a point cloud located on the estimated plane to generate a binary image. Then, the point cloud identification unit 21 detects a shape similar to the binary image of a feature pattern indicating a shape of a planar portion in an outer shape of the target stored in advance from the generated binary image to identify the target.

An example of a more detailed configuration of the point cloud identification unit 21 will be described. The point cloud identification unit 21 includes a sensor data acquisition unit 211, a storage unit 212, and an identification unit 223.

The sensor data acquisition unit 211 acquires the object detection data from the three-dimensional sensor 11. The object detection data acquired by the sensor data acquisition unit 211 is, for example, a point cloud including a plurality of detection points. Hereinafter, the object detection data is referred to as point cloud data.

The storage unit 212 includes at least one of the RAM, the ROM, a flash memory, and a hard disk drive. The storage unit 212 stores data and the like used in processing of the controller 20.

The storage unit 212 stores a search range that is a range in which the target is estimated to be present. The storage unit 212 stores a feature pattern of the target for identifying the target.

The search range is a range in which a plane extraction point cloud is extracted. The plane extraction point cloud is used for processing of identifying a target from point cloud data that is object detection data. The point cloud data includes point clouds of a measured distance and a viewing angle of the three-dimensional sensor 11.

The target feature pattern is an image indicating the shape of a planar portion in the outer shape of the target. In the present embodiment, the feature pattern is a binary image of a side surface of a vessel of a dump truck.

The identification unit 223 identifies the target from the object detection data of the three-dimensional sensor 11. More specifically, the identification unit 223 estimates a plane constituting at least a part of the outer shape of the target from the point cloud data acquired by the sensor data acquisition unit 211, extracts a point cloud located on the estimated plane to generate a binary image, and identifies the target from the binary image.

The identification unit 223 projects the point cloud data onto the projection plane, three-dimensionally restores a portion having a high point cloud density on the projection plane, and estimates the plane of the target.

The identification unit 223 detects a shape similar to the binary image of a feature pattern indicating a shape of a planar portion in the outer shape of the target stored in advance from the generated binary image to identify the target.

Fig. 4 is a schematic diagram illustrating an operation of the work vehicle according to the first embodiment. The wheel loader 100 identifies a dump truck 200 to be loaded in order to load a conveyance object picked up by the work machine 110. The wheel loader 100 identifies a vessel BE of the dump truck 200 on the basis of the object detection data acquired from the three-dimensional sensor 11.

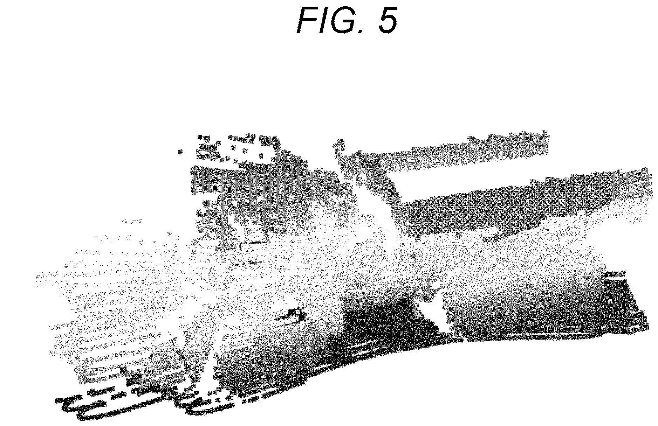

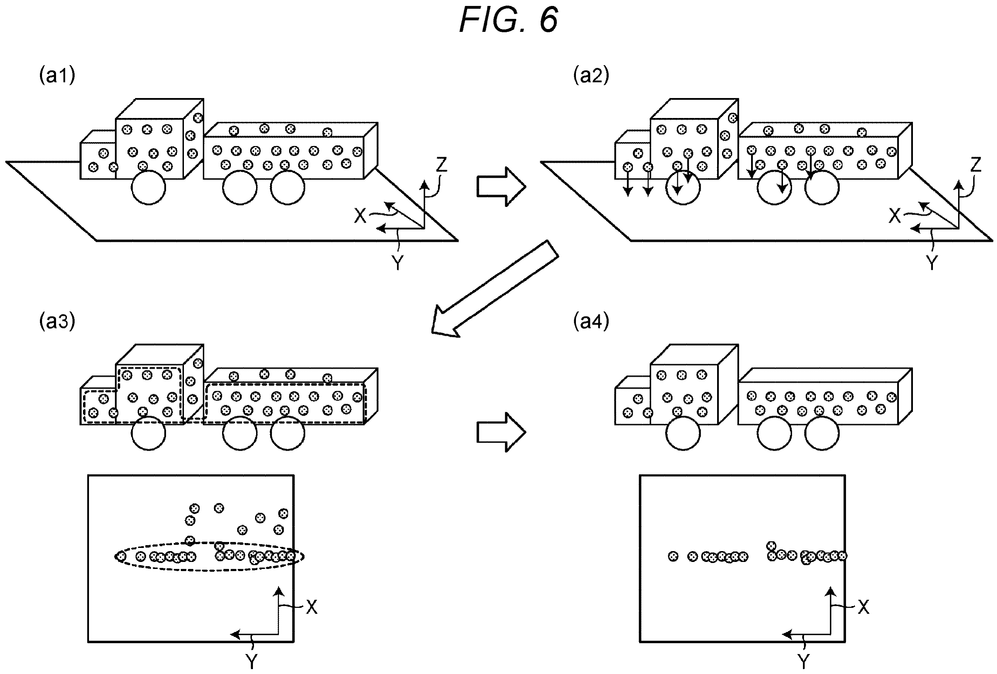

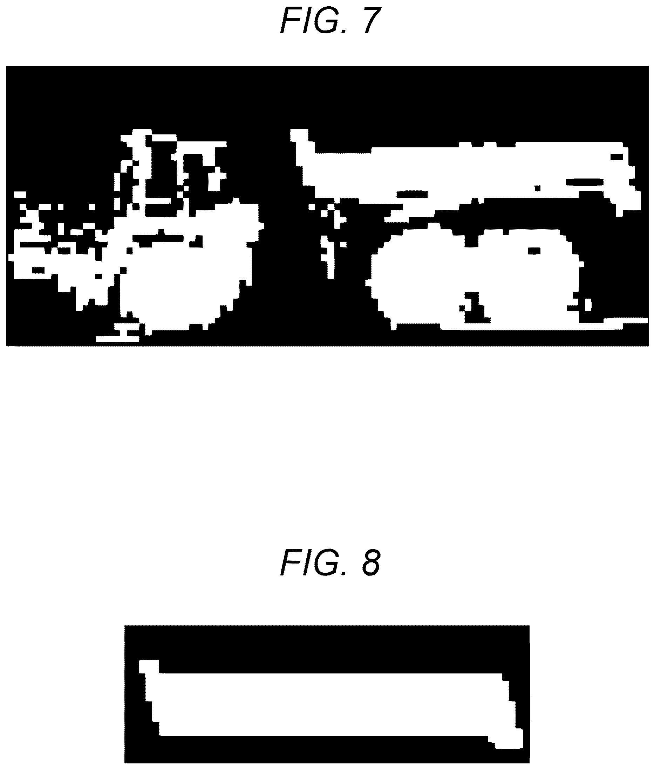

With reference to Figs. 5 to 8, the target identification processing by the identification unit 223 will be described. Fig. 5 is a diagram illustrating an example of a point cloud indicating a target. Fig. 6 is a schematic diagram for explaining an example of the target identification processing. Fig. 7 is a view illustrating an example of a target binary image. Fig. 8 is a view illustrating an example of the target feature pattern. As illustrated in Fig. 5, the point cloud includes a plurality of detection points defined on the surface of the object. First, as illustrated in Fig. 6, the identification unit 223 estimates a plane constituting a target from the point cloud data. As illustrated in Fig. 6(a1), a point cloud within the search range is extracted from the point cloud data, and the point cloud of the target is acquired. Then, as illustrated in Fig. 6 (a2), the identification unit 223 projects the plane extraction point cloud onto an xy plane of the coordinate system in which a z axis is orthogonal to the ground plane. Fig. 6 (a3) illustrates the point cloud projected on the xy plane. The point cloud surrounded by a broken line on the xy plane corresponds to a point cloud on a side surface orthogonal to the xy plane surrounded by a broken line of the dump truck. The point cloud on the plane orthogonal to the xy plane of the dump truck is aggregated on one line segment and becomes dense. Then, as illustrated in Fig. 6 (a4), the identification unit 223 performs conversion to the original three-dimensional position while leaving a portion surrounded by a broken line having a high point cloud density on the xy plane. In this manner, the identification unit 223 estimates a plane constituting the target by extracting an on-plane point cloud that is a point cloud on the plane constituting the target. In this example, the on-plane point cloud is a point cloud on the vessel side surface.

As illustrated in Fig. 7, the identification unit 223 generates a binary image on the basis of the extracted on-plane point cloud. The identification unit 223 crops a plane peripheral point cloud, which is a point cloud around the estimated plane, as a point cloud for binary image generation to generate a binary image. The identification unit 223 detects a shape similar to the feature pattern indicating the shape of the vessel illustrated in Fig. 8 in the generated binary image. In a case where the similar shape is found, the identification unit 223 identifies the entire shape of the dump truck using the detection position and the shape of the vessel of the feature pattern as references.

The image processing unit 22 identifies the target from a captured image captured by the camera 12. More specifically, the image processing unit 22 identifies the target on the basis of the converted image obtained by performing the viewpoint conversion as if the captured image is viewed from a predetermined direction using the identification result based on the point cloud data. The image processing unit 22 includes a viewpoint conversion unit 23, a feature amount extraction unit 24, an image classification unit 25, and a consistency confirmation unit 26.

In the embodiment, the relative positional relationship between the three-dimensional sensor 11 and the camera 12 is calibrated before the viewpoint conversion unit 23 executes viewpoint conversion processing.

The viewpoint conversion unit 23 performs viewpoint conversion of the captured image captured by the camera 12 into a converted image viewed from a predetermined direction. More specifically, the viewpoint conversion unit 23 performs viewpoint conversion of the captured image on the basis of the position and posture of the target identified on the basis of the point cloud data and the relative positional relationship between the three-dimensional sensor 11 and the camera 12.

The predetermined direction is, for example, a direction in which a target is easily classified by image classification. The predetermined direction is, for example, a direction viewed from the front when the wheel loader 100 performs work on a target. The predetermined direction is, for example, a direction in which the wheel loader 100 faces a target. In a case where the target is a dump truck, the predetermined direction is a direction in which a side surface of the dump truck is viewed from the front. When the target is a conveyance object, the predetermined direction is a direction in which the wheel loader 100 faces a fork insertion hole.

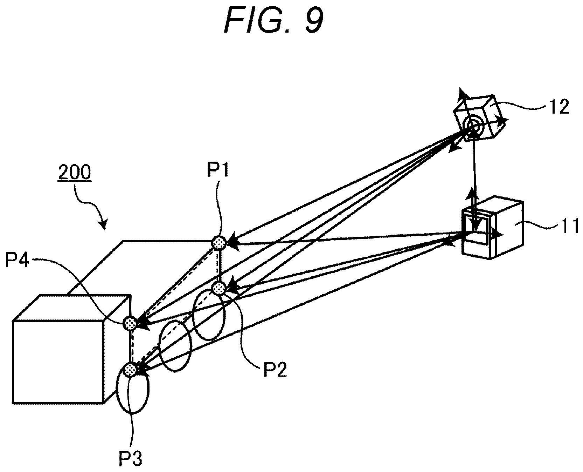

Fig. 9 is a schematic diagram illustrating a positional relationship among a three-dimensional sensor, a camera, and a target. In Fig. 9, it is assumed that the dump truck 200 is a target. Since the three-dimensional sensor 11 and the camera 12 have different attachment positions, the coordinate system of the three-dimensional sensor 11 and the coordinate system of the camera 12 are shifted from each other. It is assumed that the four corners of the vessel side surface of the dump truck 200 are a point P1, a point P2, a point P3, and a point P4. The positions of the point P1, the point P2, the point P3, and the point P4 are different between the case of being represented in the coordinate system of the three-dimensional sensor 11 and the case of being represented in the coordinate system of the camera 12.

The viewpoint conversion method will be described in detail. First, the viewpoint conversion unit 23 projects the positions of four or more points located on the plane estimated by the point cloud identification unit 21 onto the captured image. In the embodiment, the point cloud identification unit 21 projects the estimated positions of the four corners of the plane onto the captured image. In a case where the target is a box-shaped pallet, the point cloud identification unit 21 projects the positions of the four corners of one surface of the estimated pallet onto the captured image. In a case where the target is a dump truck, the point cloud identification unit 21 projects the estimated positions of the four corners of the vessel of the dump truck onto the captured image.

Then, the viewpoint conversion unit 23 performs viewpoint conversion using a plurality of points projected onto the captured image as a reference. In the embodiment, the viewpoint conversion unit 23 converts a shape whose outer shape is defined by the plurality of points projected onto the captured image into a captured image viewed from a predetermined direction. For example, the viewpoint conversion unit 23 performs viewpoint conversion such that the outer shape defined by the plurality of points becomes the shape in the front view stored in advance in a storage unit. The viewpoint conversion unit 23 outputs the data of the converted image after the viewpoint conversion to the feature amount extraction unit 24.

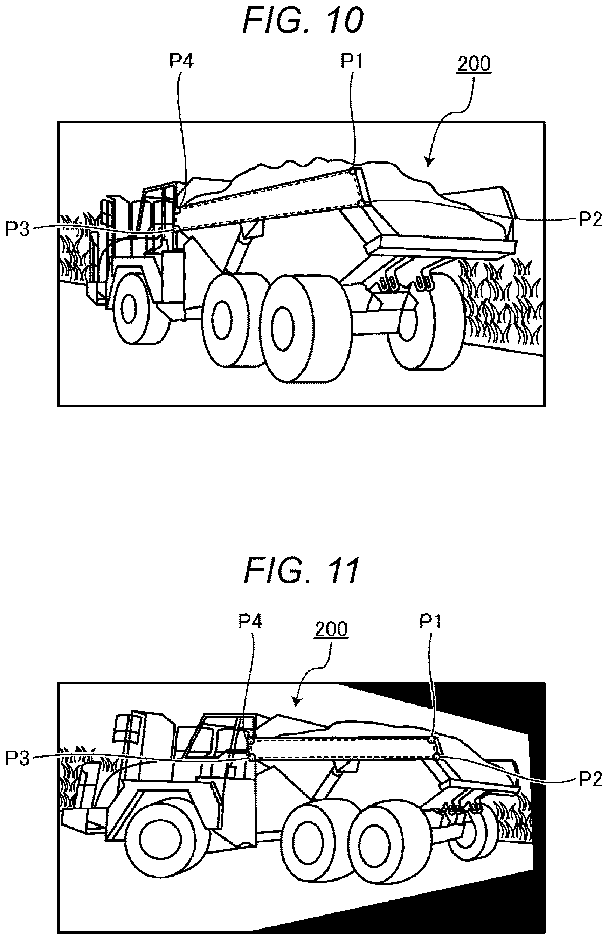

The viewpoint conversion will be described using the image of the dump truck 200 with reference to Figs. 10 and 11. Fig. 10 is a view for explaining an example of a captured image of a target. Fig. 11 is a view for explaining an example of a converted image obtained by performing viewpoint conversion of the captured image illustrated in Fig. 10. Fig. 10 is a view in which the points P1, P2, P3, and P4 of the four corners of the vessel side surface of the dump truck 200 estimated by the point cloud identification unit 21 are projected onto the captured image. Fig. 11 is a converted image obtained by performing viewpoint conversion as if the points P1, P2, P3, and P4 of the four corners of the vessel side surface are viewed from the side of the dump truck, which is a direction facing the vessel.

The feature amount extraction unit 24 extracts a feature amount from the converted image after the viewpoint conversion. The feature amount data of the feature amount extracted by the feature amount extraction unit 24 is output to the image classification unit 25.

The feature amount is, for example, a numerical value of an edge (color boundary) in an image.

The image classification unit 25 uses the feature amount data to image-classify by machine learning whether the image is a target image or not from the converted image. The image classification unit 25 image-classifies the converted image on the basis of the feature amount extracted by the feature amount extraction unit 24 and a learned parameter of the machine learning model stored in a storage unit (not illustrated).

The method for identifying the target on the basis of the converted image is not limited to the above. As a target identification method, for example, pattern matching may be used.

The consistency confirmation unit 26 confirms the consistency of the target identification result. The consistency confirmation unit 26 confirms the consistency of the target identified on the basis of the point cloud data. The consistency confirmation unit 26 confirms consistency between the identification result by the point cloud identification unit 21 and the identification result that is the classification result by the image classification unit 25. The consistency confirmation unit 26 confirms the consistency between the target identified on the basis of the point cloud data and the target identified on the basis of the converted image. In a case where the targets identified by the point cloud identification unit 21 are classified as the same targets by the image classification unit 25, the consistency confirmation unit 26 determines that the identification results of the targets are consistent. In a case where the targets identified by the point cloud identification unit 21 are not classified as the same targets by the image classification unit 25, the consistency confirmation unit 26 determines that the identification results of the targets are not consistent. Note that, in a case where the identification result by the point cloud identification unit 21 is different from the identification result that is the classification result by the image classification unit 25, the consistency confirmation unit 26 may give priority to the identification result by the point cloud identification unit 21.

The output control unit 29 controls to output the identification result by the point cloud identification unit 21 via the output unit 19. For example, in a case where a target is identified, the output control unit 29 outputs a video signal for displaying a video indicating the identified target on the monitor. For example, in a case where a target is identified, the output control unit 29 outputs a control signal for turning on the lamp. For example, in a case where a target is identified, the output control unit 29 outputs a control signal for sounding a buzzer.

### <Processing by Controller>

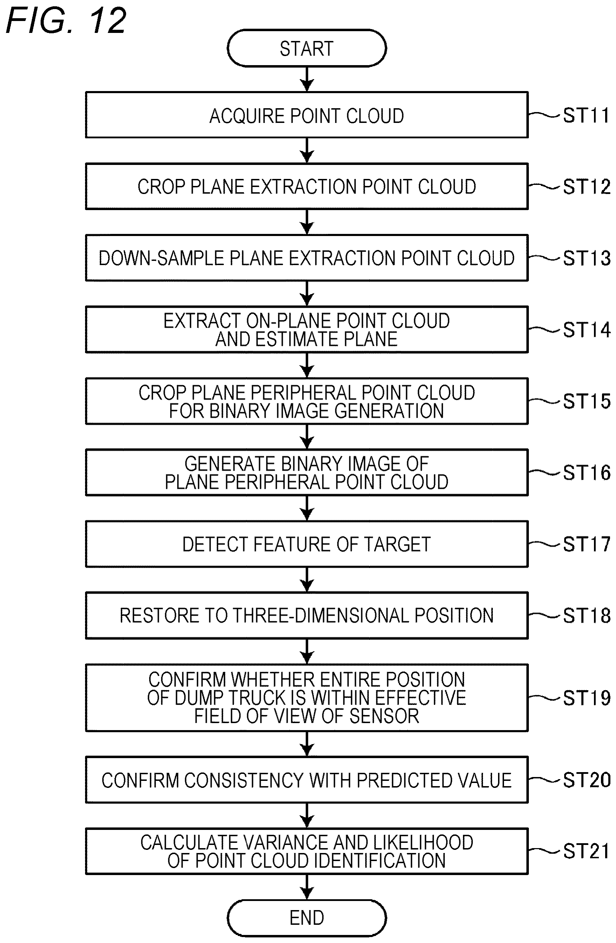

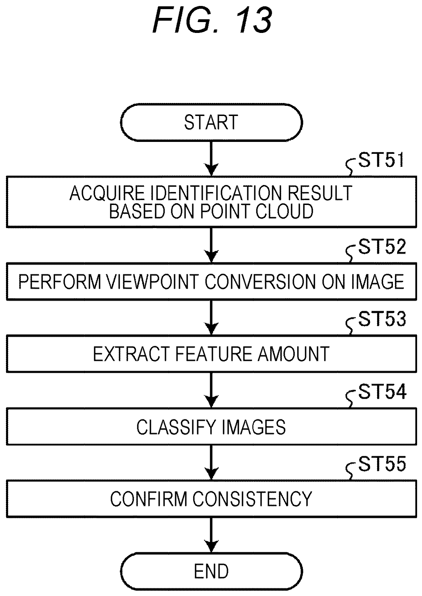

When the target identification processing is started during the activation of the wheel loader 100, the processing illustrated in Figs. 12 and 13 is executed. Fig. 12 is a flowchart illustrating an example of processing of a target identification method by a point cloud. The processing of the flowchart illustrated in Fig. 12 is the target identification processing by the point cloud. Note that the processing from step ST19 to step ST21 is not essential processing.

The controller 20 acquires a point cloud (step ST11). More specifically, the controller 20 receives the point cloud data from the three-dimensional sensor 11 by the sensor data acquisition unit 211. The controller 20 proceeds to step ST12.

The controller 20 crops the plane extraction point cloud (step ST12). More specifically, the controller 20 extracts a point cloud included in the search range in which a target is estimated to be present from the point cloud data as a plane extraction point cloud by the identification unit 223. The controller 20 proceeds to step ST13.

The controller 20 down-samples the plane extraction point cloud (step ST13). More specifically, the controller 20 down-samples the plane extraction point cloud using voxel down-sampling which is an example of a down-sampling method of the point cloud data by the identification unit 223. The controller 20 proceeds to step ST14.

The controller 20 extracts the on-plane point cloud and estimates a plane (step ST14). More specifically, the controller 20 extracts the on-plane point cloud, which is a point cloud on the vessel side surface, from the down-sampled plane extraction point cloud and estimates the vessel side surface, which is a plane, by the identification unit 223. The controller 20 proceeds to step ST15.

The controller 20 crops a point cloud for binary image generation. (Step ST15). More specifically, the controller 20 crops the plane peripheral point cloud, which is a point cloud around the estimated plane, as a point cloud for binary image generation by the identification unit 223. The controller 20 proceeds to step ST16.

The controller 20 generates a binary image of the plane peripheral point cloud (step ST16). More specifically, the controller 20 performs binary imaging on the yz plane of the coordinate system in which the normal vector of the estimated plane coincides with the direction of an x axis based on the cropped plane peripheral point cloud by the identification unit 223. The yz plane is a plane including the estimated plane. The controller 20 proceeds to step ST17.

The controller 20 detects a feature of a target from the binary image (step ST17). More specifically, the controller 20 detects a shape similar to the feature pattern in the binary image by the identification unit 223. The controller 20 proceeds to step ST18.

The controller 20 restores to the three-dimensional position (step ST18). More specifically, the controller 20 identifies the position, posture, and shape of the entire dump truck using the detection position and the shape of the vessel of the feature pattern in the binary image as references by the identification unit 223. The controller 20 proceeds to step ST19.

The controller 20 confirms whether the entire position of the dump truck is within the effective field of view of the sensor (step ST19). More specifically, the controller 20 confirms whether the position of the entire dump truck is within the effective field of view of the three-dimensional sensor 11 by the identification unit 223. This is to confirm that the identification performance is guaranteed because the identification performance is deteriorated around the boundary of the field of view of the three-dimensional sensor 11.

The controller 20 confirms consistency with a predicted value (step ST20). More specifically, the controller 20 compares the predicted position of the target predicted from the previous estimation result with the position of the target currently estimated to confirm whether the difference is equal to or less than a threshold by the identification unit 223.

The controller 20 calculates the variance and likelihood of the point cloud identification (step ST21).

In this manner, the controller 20 identifies the target vessel of the dump truck from the point cloud data.

Following the above-described target identification processing based on the point cloud data, the processing illustrated in Fig. 13 is executed. Fig. 13 is a flowchart illustrating an example of processing of the target identification method according to the embodiment. The processing of the flowchart illustrated in Fig. 13 is target identification processing by image classification using the learned parameter. Note that the processing of step ST55 is not essential processing.

The controller 20 acquires an identification result based on the point cloud (step ST51). More specifically, the controller 20 acquires the point cloud data including the plurality of detection points, which is the object detection data, from the three-dimensional sensor 11 and identifies the target from the point cloud data by the point cloud identification unit 21. The processing in step ST51 is specifically illustrated in the above-described processing of the flowchart illustrated in Fig. 11. The controller 20 proceeds to step ST52.

The controller 20 performs viewpoint conversion on the image (step ST52). More specifically, the controller 20 performs viewpoint conversion of the captured image captured by the camera 12 into a captured image viewed from a predetermined direction by the viewpoint conversion unit 23. The controller 20 proceeds to step ST53.

The controller 20 extracts a feature amount (step ST53). More specifically, the controller 20 extracts the feature amount from the converted image after the viewpoint conversion by the feature amount extraction unit 24. The feature amount data of the feature amount extracted by the feature amount extraction unit 24 is output to the image classification unit 25. The controller 20 proceeds to step ST54.

The controller 20 classifies the images (step ST54). More specifically, the controller 20 image-classifies the converted image on the basis of the feature amount extracted by the feature amount extraction unit 24 and the learned parameter of the machine learning model stored in the storage unit (not illustrated) by the image classification unit 25. The controller 20 proceeds to step ST55.

The controller 20 confirms consistency (step ST55). More specifically, the controller 20 confirms consistency between the identification result by the point cloud identification unit 21 and the identification result that is the classification result by the image classification unit 25 by the consistency confirmation unit 26.

In this manner, the target is identified from the captured image captured by the camera 12 while suppressing a calculation load.

### <Effects>

As described above, in the embodiment, the captured image is subjected to the viewpoint conversion using the identification result based on the point cloud data, and the target is identified on the basis of the converted image obtained by performing the viewpoint conversion. According to the embodiment, the calculation load is suppressed by not performing processing with a high calculation load such as deep learning, and the target can be identified from the captured image captured by the camera 12.

In the embodiment, since the target is identified on the basis of the converted image obtained by performing viewpoint conversion, the target can be identified with high accuracy.

In the embodiment, the viewpoint conversion of the captured image is performed on the basis of the position and posture of the target identified based on the point cloud data and the relative positional relationship between the three-dimensional sensor 11 and the camera 12. In the embodiment, the viewpoint conversion of the captured image can be more appropriately performed by using the identification result based on the point cloud data.

In the embodiment, the viewpoint conversion is performed as if a target is viewed from a direction in which the target is viewed from the front when the wheel loader 100 performs work on the target. According to the embodiment, the target can be identified on the basis of the converted image obtained by performing viewpoint conversion as if the target is viewed from the direction in which the target is easily identified. In the embodiment, the target can be identified with high accuracy.

In the embodiment, the plurality of points located on a plane estimated from the point cloud data is projected on the captured image, and the viewpoint conversion is performed using the plurality of points as a reference. According to the embodiment, the viewpoint conversion can be performed while suppressing the calculation load.

### Reference Signs List

- 1: Identification system
- 11: Three-dimensional sensor (object detection sensor)
- 12: Camera
- 19: Output unit
- 20: Controller
- 21: Point cloud identification unit
- 211: Sensor data acquisition unit
- 212: Storage unit
- 213: Identification unit
- 22: Image processing unit
- 221: Viewpoint conversion unit
- 222: Feature amount extraction unit
- 223: Image classification unit
- 224: Consistency confirmation unit
- 29: Output control unit
- 100: Wheel loader (work vehicle)
- 102: Vehicle body
- 102F: Vehicle body front portion
- 102R: Vehicle body rear portion
- 103: Cab
- 103R: Cab
- 104: Traveling device
- 104A: Engine
- 104B: Brake
- 104C: Steering cylinder
- 105: Wheel
- 105F: Front wheel
- 105R: Rear wheel
- 106: Tire
- 106F: Front tire
- 106R: Rear tire
- 107: Transmission gear
- 108: Parking brake
- 109: Joint mechanism
- 110: Work machine
- 111: Boom
- 112: Bucket
- 112B: Distal end portion
- 113: Bell crank
- 114: Link
- 115: Boom cylinder
- 116: Bucket cylinder
- 1000: Computer system
- 1001: Processor
- 1002: Main memory
- 1003: Storage
- 1004: Interface

## Claims

1. An identification system for identifying a target from objects present around a work vehicle, the identification system comprising:
an object detection sensor attached to the work vehicle and configured to detect the objects present around the work vehicle;
a camera attached to the work vehicle and configured to capture an image of surroundings of the work vehicle; and
a controller,
wherein the controller:
acquires point cloud data being object detection data from the object detection sensor and image data of a captured image captured by the camera;
identifies a target on a basis of the point cloud data;
converts the captured image using an identification result based on the point cloud data; and
identifies the target on a basis of a converted image.

2. The identification system according to claim 1,
wherein the converted image is an image obtained by performing viewpoint conversion as if the captured image is viewed from a predetermined direction using the identification result based on the point cloud data.

3. The identification system according to claim 2,
wherein the controller
performs viewpoint conversion of the captured image on a basis of a position and a posture of a target identified on a basis of the point cloud data, and a relative positional relationship between the object detection sensor and the camera.

4. The identification system according to claim 2 or 3,
wherein the predetermined direction is a direction viewed from a front when a work vehicle performs work on a target.

5. The identification system according to claim 2 or 3,
wherein the controller:
estimates a plane constituting at least a part of an outer shape of a target from the point cloud data;
extracts a point cloud located on the estimated plane to generate a binary image;
identifies the target from the binary image;
projects a plurality of points located on the estimated plane onto the captured image; and
performs viewpoint conversion using the plurality of points projected onto the captured image as a reference.

6. The identification system according to claim 1,
wherein the controller
confirms consistency between the target identified based on the point cloud data and the target identified based on the converted image.

7. An identification method for identifying a target from objects present around a work vehicle, the identification method comprising:
acquiring point cloud data being object detection data from an object detection sensor attached to the work vehicle and configured to detect the objects present around the work vehicle;
acquiring image data of a captured image from a camera attached to the work vehicle and configured to capture an image of surroundings of the work vehicle;
identifying a target on a basis of the point cloud data;
converting the captured image using an identification result based on the point cloud data; and
identifying the target on a basis of a converted image.

8. A work vehicle comprising:
a vehicle body;
an object detection sensor attached to the work vehicle and configured to detect objects present around the work vehicle;
a camera attached to the work vehicle and configured to capture an image of surroundings of the work vehicle; and
a controller,
wherein the controller:
acquires point cloud data being object detection data from the object detection sensor and image data of a captured image captured by the camera;
identifies a target on a basis of the point cloud data;
converts the captured image using an identification result based on the point cloud data; and
identifies the target on a basis of a converted image.
